# DEMANDE DE BREVET EUROPEEN

(11) **EP 3 124 380 A1**
(43) Date de publication de la demande: **01.02.2017**
(21) Numéro de dépôt: 16181405.8
(22) Date de dépôt: 27.07.2016
(51) Int. Cl.: B64C 39/02

(54) **STATION D'ACCUEIL DE DRONE ET ENSEMBLE DE GESTION D'UNE TELLE STATION D'ACCUEIL**

(30) Priorité: 30.07.2015 FR 1557294
(71) Demandeur: Airbus SAS, 31700 Blagnac (FR)
(72) Inventeur: ALONSO TABARES, Diego, 31000 TOULOUSE (FR); DELSAUT, Gerard, 31700 CORNEBARRIEU (FR); DEMAISON, Sebastien, 31490 LEGUEVIN (FR)
(74) Mandataire: Gevers & Orès

(57) **Abrégé**

- Station d'accueil de drone et ensemble de gestion d'une telle station d'accueil.
- La station d'accueil (1) comporte une structure (3) apte à être montée sur un support et pourvue d'une plate-forme (4) de réception de drone (2), un système de transmission d'informations (5) de type sans fil, le système de transmission d'informations comportant un premier ensemble de transmission d'informations apte à communiquer avec au moins un centre de contrôle et un second ensemble de transmission d'informations apte à communiquer avec au moins un drone (2), ainsi qu'une unité centrale reliée audit système de transmission d'informations (5).

## Description

### DOMAINE TECHNIQUE

La présente invention concerne une station d'accueil de drone et un ensemble de gestion d'une telle station d'accueil.

### ÉTAT DE LA TECHNIQUE

On sait qu'à l'avenir, les drones seront utilisés de plus en plus souvent pour des vérifications de sécurité ou des inspections visuelles détaillées en particulier sur des sites sensibles et/ou sécurisés ou des zones non facilement accessibles.

Actuellement, les drones ne sont pas autorisés à voler en zones urbaines et nécessitent des autorisations pour survoler les zones industrielles et les zones sensibles de l'espace aérien telles que les aéroports.

En raison notamment de la taille d'une zone susceptible d'être surveillée et de la distance par rapport à un centre de contrôle, la gestion d'un ou de plusieurs drones à partir d'un seul centre de contrôle n'est pas toujours facile dans un tel environnement.

Par ailleurs, on connaît :
- par le document US - 8 511 606, un procédé et un système comprenant une plateforme pour un drone, un système de batterie, un système de génération de puissance, des postes de chargement et une unité de contrôle ; et
- par le document US - 8 439 301, des système, et des méthodes pour le déploiement et le fonctionnement de drones.

### EXPOSÉ DE L'INVENTION

La présente invention a pour objet de remédier à cet inconvénient. Elle concerne une station d'accueil de drone comportant une structure apte à être montée sur un support et pourvue d'une plate-forme de réception d'au moins un drone.

Selon l'invention, la station d'accueil comporte également :
- un système de transmission d'informations de type sans fil, le système de transmission d'informations comportant :
   - au moins un premier ensemble de transmission d'informations apte à communiquer avec au moins un centre de contrôle ; et
   - au moins un second ensemble de transmission d'informations apte à communiquer avec au moins un drone ; et
- une unité centrale reliée audit système de transmission d'informations.

Ainsi, grâce à l'invention, ,en plus de fournir un endroit (via la plate-forme) pour recevoir un drone, par exemple en fin de mission ou pour recharger ses batteries si nécessaire comme précisé ci-dessous, la station d'accueil est en mesure, à l'aide du système de transmission d'informations, de communiquer avec le centre de contrôle (et le drone), qui peut continuer à surveiller et gérer la mission du drone, comme précisé également ci-dessous.

De façon avantageuse, la station d'accueil comporte au moins une unité de génération d'informations, liée à l'unité centrale et configurée pour générer des informations relatives à la station d'accueil, au moins certaines de ces informations pouvant être transmises au centre de contrôle, via le système de transmission d'informations.

Par ailleurs, avantageusement, la station d'accueil comporte également au moins l'un des éléments suivants :
- au moins une unité de calcul configurée pour calculer au moins une trajectoire de décollage ou une trajectoire d'atterrissage d'un drone ;
- au moins un système de charge électrique, apte à charger une batterie d'un drone posé sur la plate-forme de réception du drone, le système de charge électrique comprenant une plaque d'induction électrique alimentée par une batterie électrique, la batterie électrique étant alimentée, de préférence à l'aide d'au moins un panneau solaire monté sur la structure ;
- au moins une unité de positionnement faisant partie d'un système de positionnement par satellites ;
- au moins un panneau solaire ;
- au moins une unité météorologique ;
- au moins une unité de détermination de l'état d'au moins une batterie de la station d'accueil ;
- au moins un dispositif d'effarouchement aviaire ; et
- au moins une unité de génération d'informations apte à générer des informations relatives à un drone.

En outre, de façon avantageuse, la plate-forme de réception de drone est pourvue d'au moins un indicateur de positionnement.

La présente invention concerne également un ensemble de gestion d'une station d'accueil.

Selon l'invention, cet ensemble de gestion comporte au moins un centre de contrôle, ainsi qu'au moins une station d'accueil telle que celle décrite ci-dessus, la station d'accueil étant liée via le premier ensemble de transmission d'informations du système de transmission d'informations audit centre de contrôle qui est équipé d'une unité de transmission d'informations coopérante.

La présente invention concerne, en outre, un système de gestion d'un drone, qui comprend au moins un ensemble de gestion tel que précité, ainsi qu'au moins un drone.

Dans un mode de réalisation particulier, le drone est équipé d'une unité de guidage configurée pour guider automatiquement le drone vers une station d'accueil de l'ensemble de gestion.

En outre, dans un autre mode de réalisation particulier, le drone est équipé d'une plaque d'induction destinée à recharger une batterie et configurée pour coopérer avec une plaque d'induction d'une station d'accueil de l'ensemble de gestion, lorsque le drone est posé sur la plate-forme de cette station d'accueil.

La présente invention concerne également un procédé de transmission d'informations à l'aide d'un système de gestion d'au moins un drone, tel que décrit ci-dessus.

Selon l'invention, ledit procédé comprend au moins l'une des étapes suivantes :
- une première étape de transmission d'informations de la station d'accueil vers le centre de contrôle, ladite première étape consistant à transmettre au moins certaines des informations suivantes :
   - l'état de charge d'au moins une batterie de la station d'accueil ;
   - la disponibilité de la station d'accueil ;
   - l'état d'au moins un équipement monté sur la station d'accueil ;
- une deuxième étape de transmission d'informations du centre de contrôle vers la station d'accueil, ladite deuxième étape consistant à transmettre au moins une demande de vérification de la station d'accueil ;
- une troisième étape de transmission d'informations de la station d'accueil vers un drone, ladite troisième étape consistant à transmettre au moins un ordre de coupure d'un moteur du drone ; et
- une quatrième étape de transmission d'informations du drone vers la station d'accueil.

### BRÈVE DESCRIPTION DES FIGURES

Les figures annexées feront bien comprendre comment l'invention peut être réalisée. Sur ces figures, des références identiques désignent des éléments semblables.
La figure 1 montre schématiquement, en perspective, un drone s'approchant d'une station d'accueil selon un mode de réalisation de l'invention.
La figure 2 montre schématiquement, en perspective, la station d'accueil de la figure 1.
La figure 3 est le schéma synoptique d'un système de gestion de drone.
La figure 4 montre schématiquement, en perspective, un drone tel que représenté dans la figure 1.
La figure 5 montre schématiquement, en perspective, une station d'accueil accueillant un drone.
La figure 6 montre schématiquement, en vue latérale, la station d'accueil accueillant un drone, telle que représentée dans la figure 5.
La figure 7 est une représentation schématique illustrant des exemples de communication entre une station d'accueil, un drone et un centre de contrôle.

### DESCRIPTION DÉTAILLÉE

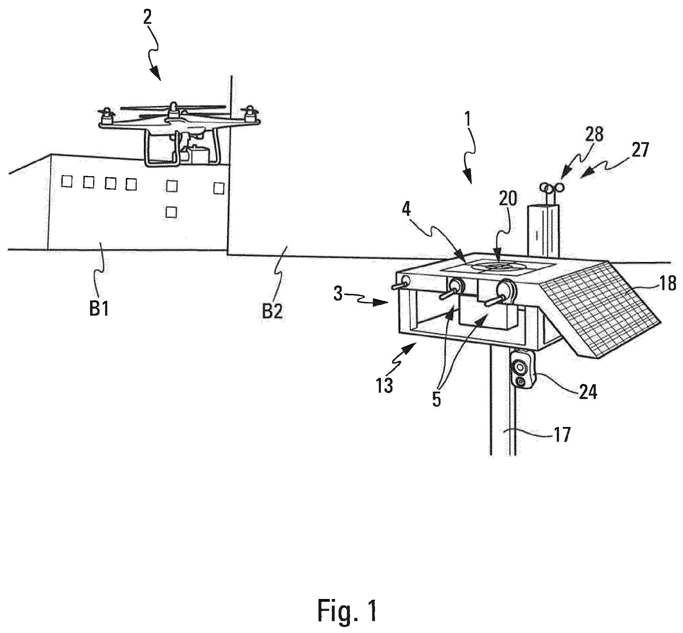

La station d'accueil 1 représentée schématiquement sur la figure 1 et permettant d'illustrer l'invention, est une station d'accueil d'un drone 2.

Sur l'exemple de la figure 1, elle est installée dans un espace, par exemple une zone industrielle ou aéroportuaire, comprenant des bâtiments B1 et B2.

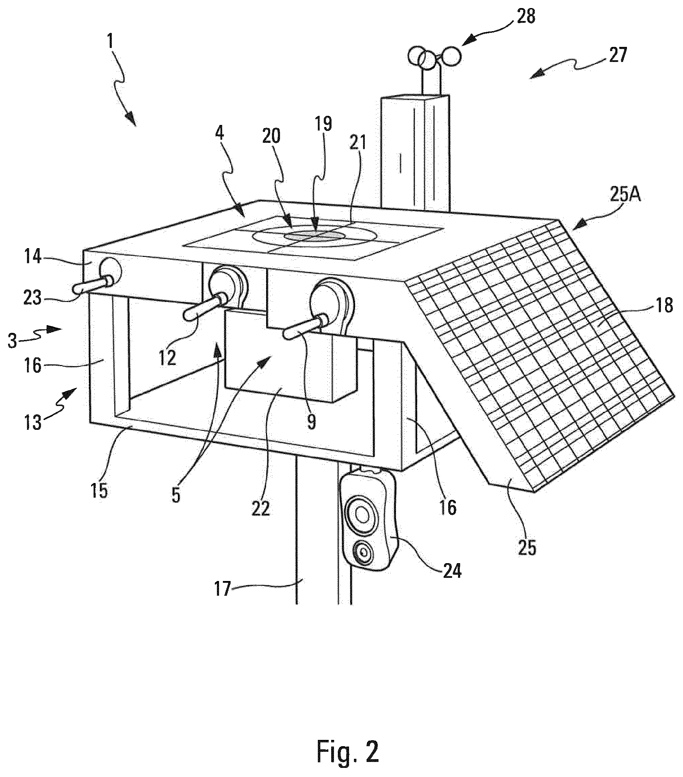

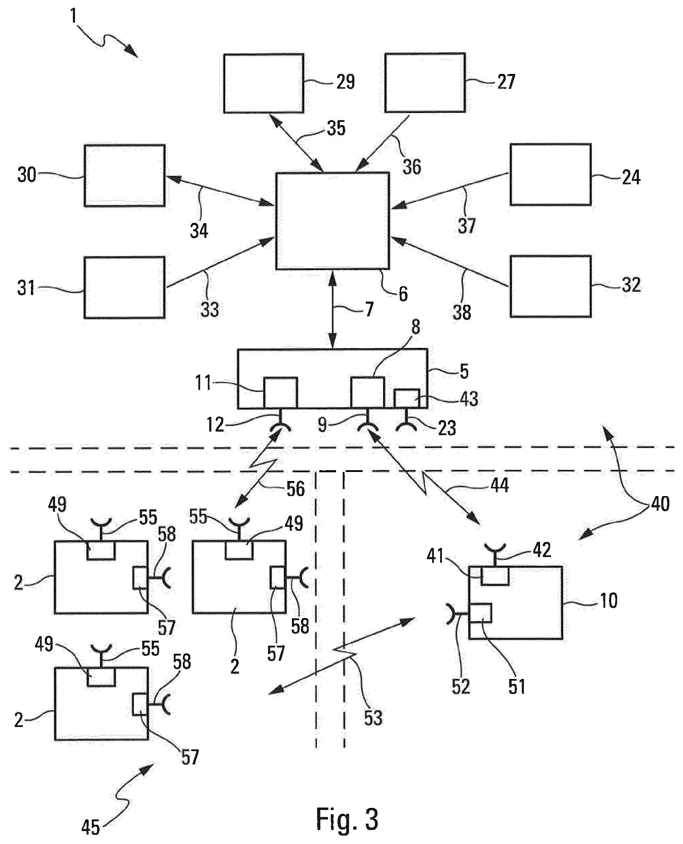

Selon l'invention, cette station d'accueil 1 comporte, comme représenté également sur la figure 2 :
- une structure 3 qui est apte à être montée sur un support (non représenté) et qui est pourvue d'une plate-forme 4 de réception (ou d'accueil) d'au moins un drone ;
- un système de transmission d'informations 5 de type sans fil ; et
- une unité centrale 6 reliée audit système de transmission d'informations 5 par l'intermédiaire d'une liaison 7, comme représenté sur la figure 3.

De plus, selon l'invention, le système de transmission d'informations 5 comporte, comme également représenté sur la figure 3 :
- un ensemble de transmission d'informations 8 apte à communiquer avec au moins un centre de contrôle 10, via une antenne 9 ; et
- un ensemble de transmission d'informations 11 apte à communiquer avec au moins un drone 2, via une antenne 12.

La station d'accueil 1 est équipée du système de transmission d'informations 5 sans fil qui peut notamment transmettre automatiquement des informations sur les équipements principaux de la station d'accueil 1, comme précisé ci-dessous.

La station d'accueil 1 est une station autonome, qui est apte à accueillir tout type de drone, quelles que soient les caractéristiques (taille, masse) du drone.

Cette station d'accueil 1 peut être installée dans différents endroits (toit, pylône, façade) de différentes zones (aéroport, site industriel, ...) et sur différents supports.

La structure 3 de la station d'accueil 1 comprend une pièce de support 13, par exemple métallique. Dans le mode de réalisation particulier, représenté sur la figure 2, la pièce de structure 13 comprend deux plaques de support 14 et 15 planes et superposées, par exemple de forme carrée ou rectangulaire. La plaque 14 supérieure sert, sur sa face supérieure, de plate-forme 4 pour recevoir un drone 2.

Les plaques de support 14 et 15 sont solidaires l'une de l'autre par l'intermédiaire de pieds de liaison 16. Les pieds de liaison 16 sont agencés entre les plaques de support 14 et 15, de préférence aux quatre coins desdites plaques de support 14 et 15.

Cette pièce de structure 13 est posée (ou fixée) sur le sol ou sur un autre support par l'intermédiaire d'un ou plusieurs pieds 17, à savoir un seul pied 17 (représenté partiellement) dans l'exemple des figures 1 et 2.

La station d'accueil 1 est également équipée, comme représenté par exemple sur les figures 1 et/ou 2 :
- d'un ou de plusieurs panneau(x) solaire(s) 18 ;
- d'un connecteur 19 de plaque d'induction ;
- d'un indicateur de positionnement 20, par exemple un marquage qui est réalisé directement sur la plate-forme 4 ou qui est réalisé sur une feuille fixée sur la plate-forme 4 et comprenant une cible 21 représentée par exemple sous forme d'une croix ;
- d'au moins une batterie 22 posée sur la plaque de support 15 inférieure ;
- d'une antenne 23 d'une unité de positionnement 43 (figure 3), coopérant avec un système de positionnement par satellites de type GPS (« Global Positioning System », en anglais) ; et
- d'un dispositif 24 d'effarouchement aviaire.

Le dispositif 24 d'effarouchement aviaire est un dispositif sonore. Dans un mode de réalisation préféré, ce dispositif sonore est déclenché automatiquement, et ceci de façon aléatoire afin d'éviter un phénomène d'habituation des oiseaux. Ce dispositif sonore peut également être commandé à distance par l'opérateur du centre de contrôle 10.

Les antennes 9, 12 et 23 sont agencées, de préférence, sur le côté de la structure 3, comme représenté sur les figures 1 et 2.

Par ailleurs, le panneau solaire 18 est configuré pour charger la batterie 22 qui sert à alimenter en électricité les équipements électriques de la station d'accueil 1. Grâce au(x) panneau(x) solaire(s) 18, la station d'accueil 1 est électriquement autonome, et n'est donc pas limitée dans son installation, puisqu'aucune connexion électrique n'est nécessaire.

Le panneau solaire 18 est agencé sur une plaque 25 (figure 2). Cette plaque 25 est fixée par l'une 25A de ses extrémités verticales, par exemple à la plaque de support 14 en étant dirigée vers le bas. Cette plaque 25 est agencée de façon inclinée. Elle peut bien entendu également être agencée horizontalement.

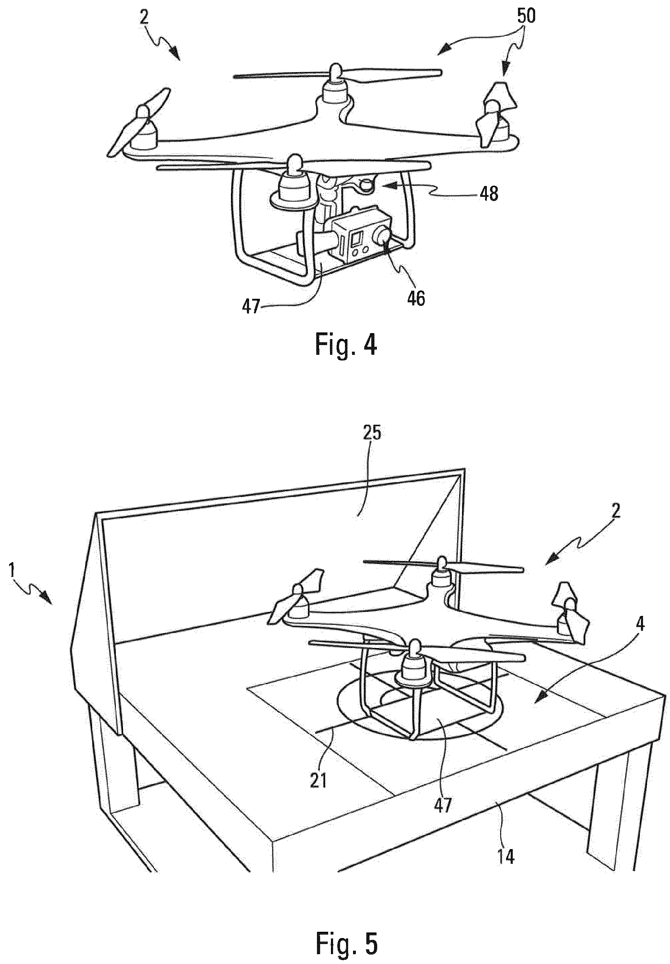

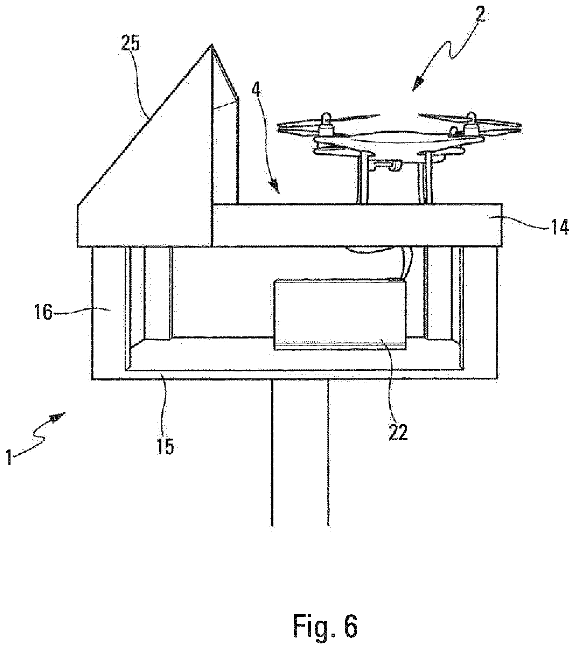

Dans un mode de réalisation particulier, représenté sur les figures 5 et 6, la plaque 25 qui porte le panneau solaire, est montée sur le dessus de la plaque de support 14. Elle peut ainsi représenter un élément de protection, notamment visuel et même contre des agressions extérieures telles que des rafales de vent par exemple.

La station d'accueil 1 comporte également un système de charge électrique, apte à charger une batterie d'un drone posé sur la plate-forme de réception du drone. Le système de charge électrique comprend la plaque d'induction électrique (dont le connecteur 19 est visible sur la figure 2) qui est alimentée par la batterie électrique 22, la batterie électrique 22 étant elle-même alimentée à l'aide du ou des panneaux solaires 18 de la station d'accueil 1.

La station d'accueil 1 comporte également une unité (ou station) météorologique 27 comprenant, notamment, au moins certains des éléments suivants : un anémomètre, un baromètre, un élément de mesure de température, ... Sur les figures 1 et 2, on a représenté, à titre d'exemple, un anémomètre 28 de l'unité météorologique 27.

Comme représenté sur la figure 3, la station d'accueil 1 comporte des unités de génération d'informations, qui sont liées à l'unité centrale 6 et qui sont configurées pour générer des informations relatives à la station d'accueil 1. Au moins certaines de ces informations sont transmises au centre de contrôle 10, via l'unité centrale 6 et le système de transmission d'informations 5.

La station d'accueil 1 comporte notamment, comme représenté sur cette figure 3, les éléments suivants :
- une unité de calcul 29 configurée pour calculer automatiquement au moins une trajectoire de décollage ou une trajectoire d'atterrissage d'un drone ;
- l'unité météorologique 27 ;
- le dispositif 24 d'effarouchement aviaire ;
- une unité d'authentification d'un drone 30 (relais de contrôle de mission) ;
- une unité 31 de détermination de l'état de la batterie et du panneau solaire de la station d'accueil 1, ou d'autres équipements de la station d'accueil 1 ; et
- une unité 32 de détermination de l'état de la batterie d'un drone ou d'autres équipements du drone.

Les informations issues de l'unité météorologique 27 sont prises en compte par l'unité de calcul 29 pour calculer les trajectoires de décollage et d'atterrissage. En particulier, la direction et la force du vent, déterminées par l'anémomètre 28, sont prises en compte pour optimiser la trajectoire en fonction des conditions externes effectives autour de la station d'accueil 1.

Les éléments 31, 30, 29, 27, 24 et 32 sont reliés, respectivement, par l'intermédiaire de liaisons 33 à 38 à l'unité centrale 6.

L'unité de calcul 29 peut également être intégrée dans l'unité centrale 6.

La station d'accueil 1 fait partie d'un ensemble de gestion 40 d'une station d'accueil. Cet ensemble de gestion 40 comporte au moins une station d'accueil 1 telle que décrite ci-dessus et au moins un centre de contrôle 10, comme illustré schématiquement sur la figure 3.

L'ensemble de gestion 40 comporte au moins une caméra (non représentée) permettant aux opérateurs de visualiser et de surveiller la station d'accueil 1 depuis le centre de contrôle 10. Cette caméra peut être localisée sur l'un des bâtiments B1 ou B2 (figure 1) ou encore sur un support intégré à la station d'accueil et elle présente une orientation permettant de visualiser la plate-forme.

Le centre de contrôle 10 est prévu, de préférence, à distance de la station d'accueil 1.

Le centre de contrôle 10 comprend une unité de transmission de données (émission/réception) 41 pourvu d'une antenne 42 qui coopère avec l'ensemble de transmission d'informations 8 (émission/réception) installé sur la station d'accueil 1, afin de pouvoir communiquer ensemble, comme illustré par un symbole 44 (représentant des ondes électromagnétiques) sur la figure 3.

Cet ensemble de gestion 40 fait partie d'un système de gestion 45 d'un drone, tel que représenté également sur la figure 3, qui comprend, de plus, au moins un drone 2. Sur la figure 3, on a représenté trois drones 2 situés à des endroits différents dans l'espace environnant la station d'accueil 1. Ces drones correspondent, de préférence, au drone 2 représenté sur la figure 4.

Chaque drone 2 est équipé, comme représenté par exemple sur cette figure 4 :
- d'un ensemble de moyens usuels comprenant notamment un moteur (non représenté) et des hélices 50, qui permettent de faire voler le drone 2 ;
- d'au moins une caméra usuelle 46 de tout type, qui est capable de prendre des images dans le visuel et/ou qui est capable de voir d'autres types de lumière que la lumière visible, par exemple infrarouge ;
- d'une plaque d'induction 47 ; et
- d'une unité 48 de positionnement, coopérant avec un système de positionnement par satellites de type GPS (« Global Positioning System », en anglais).

Le drone 2 est ainsi équipé de la caméra 46 qui lui permet d'observer des zones dangereuses et/ou d'accès difficile.

Cette caméra 46 permet également d'identifier la cible 21 sur la plate-forme 4 de la station d'accueil 1 (figures 4 et 5) afin de permettre au drone 2 se positionner correctement sur la station d'accueil 1 comme précisé ci-dessous.

Le drone 2 est également équipé de la plaque d'induction 47 destinée à recharger au moins une batterie embarquée (non représentée), qui est destinée à alimenter en électricité les différents équipements du drone 2. Cette plaque d'induction 47 est configurée pour coopérer avec la plaque d'induction de la station d'accueil 1, lorsque le drone 2 est posé sur la plate-forme 4 de cette station d'accueil 1, comme illustré par exemple sur les figures 5 et 6.

Le système de gestion 45 comporte ainsi un système de charge électrique comprenant les deux plaques d'induction magnétique :
- dont l'une est installée sur la station d'accueil 1 et est alimentée par la batterie 22 ; et
- dont l'autre 47 est installée sur le drone 2.

Lorsque le drone 2 est posé sur la plate-forme 4, comme représenté sur les figures 5 et 6, ces deux plaques d'induction magnétique coopèrent ensemble de sorte que la plaque d'induction de la station d'accueil 1, alimentée par la batterie 22, agit de façon usuelle sur la plaque d'induction 47 du drone 2, pour que cette dernière alimente la batterie du drone 2.

Le drone 2 est également équipé d'une unité de guidage automatique,(non représentée) qui est configurée pour guider le drone 2 automatiquement vers la station d'accueil 1 de l'ensemble de gestion 45. Pour ce faire, l'unité de guidage détermine des ordres de guidage, à partir d'informations relatives à une position à atteindre (coordonnées GPS de la station d'accueil 1 ou positionnement de l'indicateur de positionnement 20 sur la station d'accueil 1 notamment), et elle transmet ces ordres de guidage à des équipements usuels du drone destinés à réaliser son pilotage en vol (moteur, hélices, ...).

Le guidage du drone 2 (par exemple de sa position dans la figure 1 par rapport à la station d'accueil 1) jusqu'à sa position finale dans les figures 5 et 6, est réalisé en deux temps :
- tout d'abord, le drone 2 s'approche au plus près de la station d'accueil 1 à l'aide de l'unité de guidage, en utilisant les coordonnées GPS de la station d'accueil 1 (qui lui ont été transmises), et en déterminant ses propres coordonnées GPS à l'aide de l'unité 48 de positionnement ;
- puis, dès que possible, la caméra 46 du drone 2 identifie la cible 21 de l'indicateur de positionnement 20 sur la station d'accueil 1, et le drone 2 détermine le positionnement de cette cible 21 et il se dirige vers cette dernière pour se poser sur la plate-forme 4, à l'aide de l'unité de guidage.

Aucune intervention du centre de contrôle n'est donc nécessaire pour amener le drone 2 sur la station d'accueil 1.

Un opérateur peut tout de même intervenir si besoin. En particulier, il peut soit prendre le contrôle du drone 2 et le diriger manuellement, soit lui envoyer des coordonnées GPS d'une autre station d'accueil 1 pour qu'il se diriger vers cette autre station d'accueil 1.

Un tel drone 2, qui est donc autonome, peut notamment être utilisé pour réaliser une inspection visuelle, par exemple :
- du haut du fuselage d'un aéronef se trouvant sur un aéroport ;
- d'une zone de sécurité de l'aéroport ;
- d'une zone militaire dangereuse ;
- d'un entrepôt de produits chimiques ;
- de zones sensibles d'une société, ...

Quant à la station d'accueil 1, elle a notamment pour but :
- d'accueillir un drone 2 sur une zone sécurisée ;
- de recharger les batteries d'un drone 2 qu'elle a accueilli ; et
- de fournir des informations sur des équipements du drone 2 et/ou de la station d'accueil 1.

Plus généralement, la station d'accueil 1 est utilisée pour échanger des informations avec le drone 2 et/ou un opérateur du centre de contrôle 10. Le système de transmission d'informations 5 est, notamment, apte à fournir les informations suivantes :
- les états des batteries du drone 2 et de la station d'accueil 1 ;
- la disponibilité de la caméra 46 (vidéo, calibration, infrarouge,...) du drone 2;
- l'état du ou des moteurs du drone 2 ;
- la disponibilité de la station d'accueil 1 ; et
- les états des autres équipements du drone 2 et de la station d'accueil 1.

Pour ce faire, chaque drone 2 comprend, comme représenté schématiquement sur la figure 3, une unité de transmission de données 49 pourvue d'une antenne 55 qui coopère (émission/réception) avec l'ensemble de transmission d'informations 11 installé sur la station d'accueil 1 et pourvu de l'antenne 12, afin de pouvoir communiquer ensemble, comme illustré par un symbole 56 (représentant des ondes électromagnétiques).

Par ailleurs, pour la communication au sein du système de gestion 45, chaque drone 2 comprend également, comme représenté également schématiquement sur la figure 3, une unité de transmission de données 57 pourvue d'une antenne 58 qui coopère (en émission/réception) avec une unité de transmission d'informations 51 pourvue d'une antenne 52, qui est installée dans le centre de contrôle 10, afin de pouvoir communiquer ensemble, comme illustré par un symbole 53 (représentant des ondes électromagnétiques).

La communication au sein du système de gestion 45 à partir de la station d'accueil 1 peut comprendre au moins l'une des étapes suivantes :
- une étape de transmission d'informations de la station d'accueil 1 vers le centre de contrôle 10, cette étape consistant à transmettre au moins certaines des informations suivantes :
   - l'état de charge de la batterie de la station d'accueil 1 ;
   - la disponibilité de la station d'accueil 1 ;
   - l'état d'au moins un équipement monté sur la station d'accueil 1 (dispositif d'effarouchement aviaire, unité météorologique, panneau solaire, ...) ;
- une étape de transmission d'informations du centre de contrôle 10 vers la station d'accueil 1, cette étape consistant à transmettre au moins certaines des informations suivantes :
   - une demande de vérification de la station d'accueil 1 ;
   - une commande d'équipements de la station d'accueil 1, tels que le dispositif d'effarouchement par exemple ;
- une étape de transmission d'informations de la station d'accueil 1 vers un drone 2, cette étape consistant à transmettre au moins un ordre de coupure d'un moteur du drone 2 ; et
- une étape de transmission d'informations du drone 2 vers la station d'accueil 1.

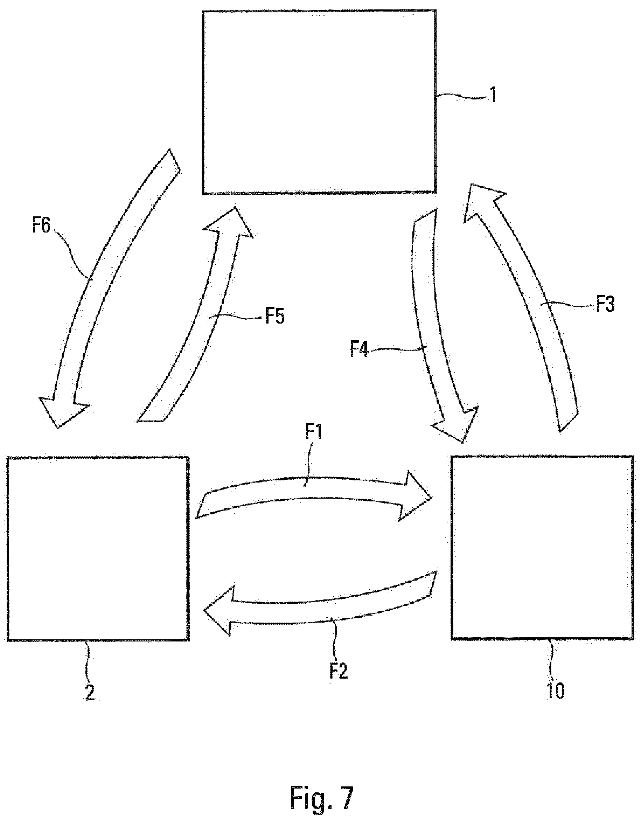

A titre d'illustration, le fonctionnement du système de gestion 45, tel que décrit ci-dessus, peut présenter les étapes E1 à E7 suivantes, dans un exemple particulier :
E1 / un opérateur (du drone 2) installé dans le centre de contrôle 10 fait une demande d'état au drone 2, comme illustré par une flèche F2 sur la figure 7 ;
E2/ les informations notamment sur le niveau de batterie du drone 2, l'état de sa carte mémoire et de la caméra, sont envoyées du drone 2 à l'opérateur du centre de contrôle 10, comme illustré par une flèche F1 sur la figure 7 ;
E3/ l'opérateur décide si le drone 2 peut être activé. Cette décision peut éventuellement être prise, de manière automatique, par une unité centrale sur la base de seuils à dépasser ou à ne pas dépasser. Par exemple, le drone 2 peut être configuré pour décoller uniquement si sa batterie est chargée à au moins 75 % et/ou si sa carte mémoire est remplie à moins de 50 % (transmission d'un message d'alerte). L'opérateur active à distance la mission du drone 2, comme illustré par la flèche F2 ;
E4/ le drone 2 décolle, afin de remplir sa mission. Un contrôle par l'opérateur du drone 2 ou le suivi d'un programme est réalisé, comme illustré par la flèche F1 ;
E5/ à tout moment, l'état de la station d'accueil 1 peut être est vérifiée par l'opérateur du centre de contrôle 10, comme illustré par une flèche F3. La station d'accueil 1 envoie des informations concernant par exemple le niveau de sa batterie, sa disponibilité, et le fonctionnement de ses différents équipements (panneau solaire, plaque d'induction, ...), comme illustré par une flèche F4 ;
E6/ à la fin de sa mission, le drone 2 est dirigé vers une station d'accueil 1 disponible et prête à l'accueillir. Le drone 2 se dirige vers la station d'accueil 1 disponible grâce aux cordonnées GPS de la station d'accueil 1. Le drone 2 identifie (via la caméra 46) le positionnement de la cible 21 de l'indicateur de positionnement 20 sur la station d'accueil 1 (flèche F5), afin de se poser correctement sur la plate-forme 4 ;
E7/ lorsque les deux plaques d'induction du système de charge électrique sont en contact, la ou les batteries du drone 2 sont rechargées (flèche F6). On arrive alors à la fin de la mission du drone 2.

## Revendications

1. Station d'accueil de drone, la station d'accueil (1) comportant :
- une structure (3) apte à être montée sur un support et pourvue d'une plate-forme (4) de réception de drone (2) ;
- un système de transmission d'informations (5) de type sans fil, le système de transmission d'informations comportant :
• au moins un premier ensemble de transmission d'informations (8) apte à communiquer avec au moins un centre de contrôle (10) ; et
• au moins un second ensemble de transmission d'informations (11) apte à communiquer avec au moins un drone (2) ; et
- une unité centrale (6) reliée audit système de transmission d'informations (5),
**caractérisée en ce qu'**elle comporte, de plus, au moins une unité de calcul (29) configurée pour calculer au moins une trajectoire de décollage ou une trajectoire d'atterrissage d'un drone (2).

2. Station d'accueil selon la revendication 1,
**caractérisée en ce qu'**elle comporte au moins une unité de génération d'informations (31), liée à l'unité centrale (6) et configurée pour générer des informations relatives à la station d'accueil (1), au moins certaines de ces informations pouvant être transmises au centre de contrôle (10) via le système de transmission d'informations (5).

3. Station d'accueil selon l'une des revendications 1 et 2,
**caractérisée en ce qu'**elle comporte, de plus, au moins un système de charge électrique, apte à charger une batterie d'un drone (2) posé sur la plate-forme (4) de réception du drone (2), le système de charge électrique comprenant une plaque d'induction électrique alimentée par une batterie électrique (2).

4. Station d'accueil selon l'une quelconque des revendications précédentes,
**caractérisée en ce qu'**elle comporte, de plus, au moins une unité de positionnement (43) faisant partie d'un système de positionnement par satellites.

5. Station d'accueil selon l'une quelconque des revendications précédentes,
**caractérisée en ce qu'**elle comporte, de plus, montés sur la structure (3), au moins un panneau solaire (18) et/ou au moins une unité météorologique (27).

6. Station d'accueil selon l'une quelconque des revendications précédentes,
**caractérisée en ce qu'**elle comporte, de plus, au moins une unité (31) de détermination de l'état d'au moins une batterie (22) de la station d'accueil (1).

7. Station d'accueil selon l'une quelconque des revendications précédentes,
**caractérisée en ce que** la plate-forme (4) de réception de drone est pourvue d'au moins un indicateur de positionnement (20).

8. Station d'accueil selon l'une quelconque des revendications précédentes,
**caractérisée en ce qu'**elle comporte, de plus, au moins un dispositif d'effarouchement aviaire (24).

9. Station d'accueil selon l'une quelconque des revendications précédentes,
**caractérisée en ce qu'**elle comporte au moins une unité de génération d'informations (30, 32) apte à générer des informations relatives à un drone (2).

10. Ensemble de gestion d'une station d'accueil,
**caractérisé en ce qu'**il comporte au moins un centre de contrôle (10), ainsi qu'au moins une station d'accueil (1) selon l'une quelconque des revendications 1 à 9, la station d'accueil (1) étant liée via le premier ensemble de transmission d'informations (8) du système de transmission d'informations (5) audit centre de contrôle (10) équipé d'une unité de transmission d'informations (41) coopérante.

11. Système de gestion d'au moins un drone,
**caractérisé en ce qu'**il comprend au moins un ensemble de gestion (40) selon la revendication 10, ainsi qu'au moins un drone (2).

12. Système selon la revendication 11,
**caractérisé en ce que** le drone (2) est équipé d'une unité de guidage configurée pour guider automatiquement le drone (2) vers une station d'accueil (1) de l'ensemble de gestion (40).

13. Système selon l'une des revendications 11 et 12,
**caractérisé en ce que** le drone (2) est équipé d'une plaque d'induction (47) destinée à recharger une batterie et configurée pour coopérer avec une plaque d'induction d'une station d'accueil (1) de l'ensemble de gestion (40), lorsque le drone (2) est posé sur la plate-forme (4) de cette station d'accueil (1).

14. Procédé de transmission d'informations à l'aide d'un système de gestion d'au moins un drone selon l'une quelconque des revendications 11 à 13,
**caractérisé en ce qu'**il comprend au moins l'une des étapes suivantes :
- une première étape de transmission d'informations de la station d'accueil (1) vers le centre de contrôle (10), ladite première étape consistant à transmettre au moins certaines des informations suivantes :
• l'état de charge d'au moins une batterie (22) de la station d'accueil (1) ;
• la disponibilité de la station d'accueil (1) ;
• l'état d'au moins un équipement (18, 27) monté sur la station d'accueil (1) ;
- une deuxième étape de transmission d'informations du centre de contrôle (10) vers la station d'accueil (1), ladite deuxième étape consistant à transmettre au moins une demande de vérification de la station d'accueil (1) ;
- une troisième étape de transmission d'informations de la station d'accueil (1) vers un drone (2), ladite troisième étape consistant à transmettre au moins un ordre de coupure d'un moteur du drone (2) ; et
- une quatrième étape de transmission d'informations du drone (2) vers la station d'accueil (1).
